# EUROPEAN PATENT APPLICATION

(11) **EP 1 843 135 A1**
(43) Date of publication of application: **10.10.2007**
(21) Application number: 07111533.1
(22) Date of filing: 05.12.1997
(51) Int. Cl.: G01F 1/66

(54) **A flow meter, a method of measuring a flow and a method of operating a flow meter**

(30) Priority: 05.12.1996 EP 96610047
(62) Divisional of application: 97610055.2
(71) Applicant: KAMSTRUP A/S, 8660 Skanderborg (DK)
(72) Inventor: Nielsen, Søren Tønnes, 8355, Solbjerg (DK)
(74) Representative: Plougmann & Vingtoft A/S

(57) **Abstract**

A flow meter and a method of measuring flows, such as flows in liquids or gasses, are described, wherein ultrasonic signals are transmitted in two or more directions in different points - that is, one is detected before the next is transmitted - in time in order to, at a given transducer, remove the adverse effects of signals reflected back to a transducer reaching the transducer at the time it is to receive a signal. In addition, a measuring setup is described wherein varying impedances of the transducers are compensated for and wherein the impedances of the transmitting and the receiving electronics have no effect on the measurement. In this setup, the transmitting electronics and the receiving electronics are directly electrically connected, and the transducers are interconnected to this electrical interconnection.

## Description

The present invention relates to flow meters, methods of measuring flows and of operating flow meters.

Ultrasonic flow meters for measuring the flow of a liquid or gas in e.g. a flow path have been known for many years. Examples of such flow meters may be seen in EP-B-0 397 596, GB-A-2 079 939, WO 90/00723, EP-B-0 498 141, DE-A-38 23 177, EP-A-0 441 531 and WO 94/04890.

Typical flow meters of this type operate by transmitting ultrasound signals through a flow of a liquid or a gas in a flow passage or path in the upstream and the downstream directions, respectively, and by subsequently determining the flow value on the basis of the difference in transmission velocity of the ultrasound signals in the two directions caused by the flow.

In order to be able to determine the quite small difference in transmission velocity of the two signals, the signals are typically transmitted in the fluid at the same time. The advantage of this choice is the fact that the detection time difference may be detected as a phase difference between the two signals. In this situation, both transmitters firstly act as transmitters and subsequently as receivers.

However, this choice causes the problem that ultrasound signals reflected from e.g. adjacent flow passage walls may reach the transducer from which they were transmitted at the same time as the signals transmitted by the other transducer. This will give reception problems, as the two signals now interfere.

In order to prevent this problem, the signals in the two directions may be at different times so that the ultrasound waves generated by one transducer are allowed to e.g. die out before that transducer is to act as receiver.

Therefore, according to the invention, the signal transmitted in the first direction is generated and detected before the signal in the opposite direction is transmitted.

However, this requires the use of a new measuring setup, as the two signals can now no longer be received simultaneously, whereby the above-mentioned method using the phase difference between the two signals may not be used.

In WO 90/00723, a solution is suggested wherein a phase difference is instead determined between the signal transmitted to the transmitting transducer and the signal received by the receiving transducer. On the basis of the phase differences in the two directions, a flow value is determined. However, using this method, the dynamic range of the flow meter is reduced due to the fact that the total dynamic area of the meter is limited by the interval of phase differences that may be determined. This interval is 2n minus the maximum phase differences possible between the transmitting signal and the received signals in the two directions. However, in this setup, as variations in temperature cause variations in the velocity of ultrasound signals in the medium, part of the phase difference will be due to temperature variations. This therefore reduces the useful phase difference, and thus the dynamic area, of this instrument.

This problem is solved by the present invention, a first aspect of which relates to a flow meter for measuring a medium flow through a flow passage defined therein, the flow meter comprising
- ultrasound generating means for generating ultrasonic signals based on input signals having a frequency of 100 kHz or more and being supplied thereto and for directing ultrasonic signals in substantially opposite directions along at least part of the flow passage,
- means for receiving ultrasonic signals having passed said part of the flow passage and for generating electrical signals related to the ultrasonic signals received,
- means for generating a first reference signal,
- means for deriving a first derived value or signal on the basis of the first reference signal and a first electrical signal generated by the receiving means and being related to an ultrasonic signal, which is based on a first input signal and which is transmitted in a first of the substantially opposite directions along the flow passage,
- means for generating a second reference signal having a frequency and/or phase different from those of the first reference signal,
- means for deriving a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction, and
- means for calculating or determining a measured flow rate of the medium through the flow passage based on the first and second derived values or signals and based on a known relationship between the frequencies and/or phases of the first and second references and/or based on a known relationship between the frequencies and/or phases of the first and second input signals.
   The frequency of the input signals may, naturally, be at least 200 kHz, such as at least 500 kHz, preferably on the order of 1 MHz.
   Thus, instead of using the input signal for the transducers as a reference signal, other reference signals are provided. In this situation, the reference signals may be provided with a lower maximum possible phase difference to the electrical signal, or the input signals may be altered to that this phase difference is lower. In addition, two reference signals may be provided: one for each direction.
   In the present context, the opposite directions are typically two opposite directions. However, also e.g. a triangular setup may be used, wherein three directions, such as three directions forming a equilateral triangle, is contemplated.
   In the present context, the phase difference between two signals not present at the point in time in question will mean the phase difference therebetween at the point in time if both signals were maintained or extrapolated in time without altered frequency and phase at least to the actual point in time.
   According to this aspect of the invention, the maximum loss of dynamic area may be reduced by e.g. adapting either the input signals to fixed reference signals or by adapting the reference signals to fixed input signals.
   It should be noted that it may be advantageous to perform the measurements in the different directions with ultrasound signals having different frequencies. This may be performed using the same transducers or different transducers depending on whether this change of frequency will cause problems in the use of the same transducers.
   The flow meter according to this first aspect, naturally, preferably also comprises means for deriving each of the first and second reference signals and/or each of the first or second input signals on the basis of one or more of the electrical signals generated by the receiving means and related to ultrasonic signals transmitted in one or more of the substantially opposite directions along the flow path.
   In a second aspect, the invention relates to a flow meter for measuring a medium flow through a flow passage defined therein, the flow meter comprising
- ultrasound generating means for generating ultrasonic signals based on input signals supplied thereto and for directing ultrasonic signals in substantially opposite directions along at least part of the flow passage,
- means for receiving ultrasonic signals having passed said part of the flow passage and for generating electrical signals related to the ultrasonic signals received,
- means for generating a first reference signal,
- means for deriving a first derived value or signal on the basis of the first reference signal and a first electrical signal generated by the receiving means and being related to an ultrasonic signal, which is based on a first input signal and which is transmitted in a first of the substantially opposite directions along the flow passage,
- means for generating a second reference signal,
- means for deriving a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction,
- means for calculating or determining a measured flow rate of the medium through the flow passage based on the first and second derived values or signals and based on a known relationship between the frequencies and/or phases of the first and second reference signals and/or based on a known relationship between the frequencies and/or phases of the first and second input signals, and
- means for deriving each of the first and second reference signals and/or each of the first and second input signals on the basis of one or more of the electrical signals generated by the receiving means and related to ultrasonic signals transmitted in one or more of the substantially opposite directions along the flow path.
   Naturally, the two reference signals may be identical, as long as either they or the input signals are derived on the basis of one or more of the electrical signals generated by the receiving means.
   Another problem encountered in prior art flow meters is the fact that in order to obtain similar measurements with the two transducers, a great effort is made to have the detecting electronics related to these two transducers be as identical as possible. This problem is solved in e.g. EP-B-0 397 596 and WO 90/00723 where the same circuits are used. However, in these setups, other problems occur due to the positioning of the electrical switches.
   In order to have the impedances of the circuits identical, the setups in EP-B-0 397 596 and WO 90/00723 require the transmitting and the receiving circuits to have identical impedances. In order to obviate this demand, a different solution has been devised in a third aspect of the invention relating to a flow meter for measuring a medium flow through a flow passage defined therein and comprising
- at least two ultrasound generating means for generating ultrasound signals based on input signals supplied thereto, for directing such signals in substantially opposite directions along at least part of the flow passage, and for receiving ultrasonic signals having passed said part of the flow passage and generating related electrical signals,
- generator means having an output for outputting input signals for the ultrasound generating means,
- first means for transmitting the input signals from the output of the generator means to the ultrasound generating means,
- deriving means for deriving values or signals based on the related electrical signals, the deriving means having an input arranged to receive the related electrical signals,
- calculating or determining means being adapted to calculate or determine, based on derived values or signals, a flow rate of the medium flowing through the flow passage, and
- second means for transmitting the related electrical signals from the ultrasound generating means to the input of the calculating or determining means,
characterized in that the first and the second transmitting means comprise:
- at least one first electrical conductor means interconnecting the output of the generator means and the input of the deriving means,
- second electrical conductor means for electrically interconnecting each ultrasound generating means to at least one of the first electrical conductor means, and
- for each ultrasound generating means, at least one switching means for enabling or preventing electrical current flow between the at least one first electrical conductor means and the actual ultrasound generating means through the second electrical conductor means electrically interconnecting the actual ultrasound generating means to the at least one of the first electrical conductor means.

Using a setup of this type, the impedance seen from the transducer is the same independently of whether the transducer acts as transmitter or receiver. In this manner, no demands are put on the receiving and the transmitting circuits in relation to the output and input impedances thereof.

Preferably, the at least one electrical switch is comprised in the second electrical conductor means in order to generate or prevent electrical interconnection between the respective ultrasound generating means and the at least one first electrical conductor means. However, it should be noted that a current flow is also prevented if the switching means provide or prevent current flow to the transducer from the side thereof opposite to the second electrical conductor means.

Preferably, the generator means are adapted to be switched on and off without to any substantial degree altering an output impedance thereof. If the generator means were to generate signals during reception of a signal having passed the flow path, the signal from the generator may interfere therewith.

In order to also obtain the advantages mentioned in relation to the first and second aspects, the flow meter preferably also comprises:
- means for generating a first reference signal,
- means for generating a second reference signal,
the deriving means comprising:
- means for deriving a first derived value or signal on the basis of the first reference signal and a first electrical signal generated by the receiving means and being related to an ultrasonic signal, which is based on a first input signal and which is transmitted subsequent to the generation of the first electrical signal and in a first of the substantially opposite directions along the flow passage, and
- means for deriving a second derived value or signal on the basis of the second reference signal and a second electrical signal generated by the receiving means and being related to an ultrasonic signal, which is based on a second input signal and which is transmitted in a second of the substantially opposite directions along the flow path, the second direction being substantially opposite the first direction,
where calculating or determining means are adapted to calculate or determine a flow rate of the medium flowing through the flow passage, based on the first and second derived values or signals and based on a known relationship between the frequencies and/or phases of the first and second references and/or based on a known relationship between the frequencies and/or phases of the first and second input signals.

Also, the flow meter preferably comprises means for deriving each of the first and second reference signals and/or each of the first or second input signals on the basis of one or more of the electrical signals generated by the receiving means and related to ultrasonic signals transmitted in one or more of the substantially opposite directions along the flow path.

For these first three aspects of the invention, the means for generating the first reference signal may be adapted to generate either the first reference signal with a frequency being an integer times a frequency of the second reference signal, or to generate the second reference signal with a frequency being an integer times a frequency of the first reference signal.

Alternatively, the means for generating the first and second reference signals may be adapted to generate the first and the second reference signals with substantially identical frequencies, such as with a known phase difference.

In the second and third aspects, the means for generating the first and second reference signals may be adapted to generate substantially identical first and second reference signals.

As is usual in the art, the ultrasound generating means are preferably adapted to generate ultrasound signals as a response to an input signal where the frequency of the ultrasound signal is substantially equal to a frequency of the input signal. In this situation, the flow meter preferably also comprises means for generating input signals for the ultrasound generating means. These means may be adapted to alternately generate input signals for the individual ultrasound generating means.

In order to be able to utilize a phase difference measurement, the means for generating the first reference signal are preferably adapted to generate the first reference signal having a frequency substantially equal to a frequency of the first electrical signal, and the means for generating the second reference signal are preferably adapted to generate the second reference signal having a frequency substantially equal to a frequency of the second electrical signal.

In this situation the means for deriving the first and the second derived value or signal are preferably adapted to generate a first derived value or signal relating to a phase difference between the first electrical signal and the first reference signal and a second derived value or signal relating to a phase difference between the second electrical signal and the second reference signal, so that the calculating or determining means may be adapted to calculate or determine a measured flow rate value of the medium in the flow passage by subtracting the first and the second derived values or signals and multiplying a resulting value by a predetermined parameter.

In addition, the flow meter may comprise means for providing one or more candidate signals having substantially the same frequency or having a number of different frequencies, such as a number of candidate signals having substantially the same frequency, at least part of which have different phases.

These candidate signals are candidates for the reference signals. The advantage by this feature is the fact that the reference signals need not actually be generated, merely selected from the candidate signals. In that situation, the means for generating the first reference signal may be adapted to generate the first reference signal by selecting one of the candidate signals.

As described above, one object of the invention is the reduction of the "waste time" and the following increase of the dynamic area of the instrument by reducing the maximum phase difference between the received signal and the reference signal. Therefore, the means for generating the first reference signal are preferably adapted to select a generated or received candidate signal having a phase corresponding to that of the first electrical signal.

In the present context, a phase "corresponding to" may mean that phase being the closest to the phase of the first electrical signal, that being the least delayed in relation to the first electrical signal, or the one in relation to which the first electrical signal is the least delayed.

A number of signal shapes may be used in flow meters of the present type. Thus, in one example, the means for generating the input signals, the means for generating the reference signals and the means for providing the candidate signals may comprise means for generating or providing square wave signals alternately shifting between their lower value and their higher value.

In this situation, the means for generating the first reference signal may be adapted to select that of the candidate signals which, starting at a point in time where the first electrical signal shifts from its lower value to its higher value, is the next of the candidate signals to shift from its lower value to its higher value.

In another example, the means for generating the input signals, the means for generating the reference signals and the means for providing the candidate signals may comprise means for generating or providing signals having well-defined maxima and minima and alternately shifting therebetween.

In that situation, the means for generating the first reference signal may be adapted to select that of the candidate signals which, starting at a point in time wherein the first electrical signal attains a maximum or a minimum, is the next of the candidate signals to attain its maximum or minimum.

Instead of or in addition to generating or providing a number of candidate signals, the flow meter may comprise means for providing a high frequency signal having a frequency substantially higher than that of the first electrical signal, and the means for generating the first reference signal may be adapted to generate the first reference signal on the basis of the high frequency signal.

In this situation, the means for providing the high frequency signal may be adapted to provide a high frequency signal having a frequency being substantially an integer times a frequency of the first electrical signal, and the means for generating the first reference signal may comprise a frequency division means for receiving the high frequency signal and for outputting the first reference signal having a frequency substantially equal to that of the first electrical signal.

Again, in a first example the means for generating the input signals, the means for generating the reference signals and the means for providing the high frequency signal may be adapted to generate or provide square wave signals alternately shifting between their lower value and their higher value.

If the frequency dividing means are adapted to generate not only a single signal but a number of candidate signals from the high frequency signal, the means for generating the first and the second reference signals may comprise means for selecting that of the candidate signals which, starting at a point in time where the first electrical signal shifts from its lower value to its higher value, is the next of the candidate signals to shift from its lower value to its higher value or vice versa.

In another example, the means for generating the input signals, the means for generating the reference signals and the means for providing the high frequency signal comprise means for generating or providing signals having well-defined maxima and minima and alternately shifting therebetween.

Naturally, the frequency dividing means may be adapted to generate not only a single signal but a number of candidate signals from the high frequency signal.

In the other example, the means for generating the first and the second reference signals may be adapted to select that of the candidate signals which, starting at a given point in time wherein the first electrical signal attains a maximum or a minimum, is the next of the candidate signals to attain its maximum or minimum or vice versa.

In all of the three first aspects of the invention, at least one of the ultrasound generating means preferably comprises:
- an input for receiving input signals,
- an ultrasound generating element, such as a piezoelectric element, for receiving the input signals and for generating ultrasonic signals accordingly,
- means for transferring the input signals from the input to the ultrasound generating element, the transferring means comprising a resilient conducting element, such as a spring, being biased against the ultrasound generating element for providing electrical contact between the input and the ultrasound generating element.

One of the advantages of this embodiment is the fact that the typical soldering spots of the electrical interconnections to the ultrasound generating element are required to be both small and strong. It should be remembered that this element typically vibrates at a frequency on the order of 1 MHz and that a too large soldering spot may affect the vibration thereof. Therefore, providing this biassing without providing the ultrasound generating element with additional weight provides a more advantageous transducer.

In a fourth aspect, the invention relates to a method for measuring the flow of a medium flowing through a flow passage, the method comprising:
- providing, based on a first input signal, a first ultrasonic signal having a first frequency and propagating in a first direction along the flow passage,
- receiving the first ultrasonic signal having passed said part of the flow passage in the first direction,
- generating a first electrical signal related to the sensed first ultrasonic signal,
- generating a first reference signal,
- comparing the first electrical signal and the first reference signal and deriving a first derived value or signal from the comparison,
- providing, subsequent to the generation of the first electrical signal and based on a second input signal, a second ultrasonic signal having a second frequency and propagating in a second direction along the flow passage, the second direction being at least substantially opposite the first direction,
- generating a second reference signal having a frequency and/or phase different from a frequency or phase of the first reference signal,
- receiving the second ultrasonic signal having passed said part of the flow passage in the second direction,
- generating a second electrical signal related to the sensed second ultrasonic signal,
- comparing the second electrical signal and the second reference signal and determining a second derived value or signal from the comparison,
- determining a measured flow rate value of the medium in the flow passage from the first and the second derived values or signals and a relation between the frequencies and/or phases of the first and second reference signals and/or a relation between the frequencies and/or phases of the first and second input signals.

As described above, the method may comprise deriving the first and second reference signals and/or the first and second input signals on the basis of the first and/or the second electrical signal.

In a fifth aspect, the invention relates to a method for measuring the flow of a medium flowing through a flow passage, the method comprising:
- providing, based on a first input signal, a first ultrasonic signal having a first frequency and propagating in a first direction along the flow passage,
- receiving the first ultrasonic signal having passed said part of the flow passage in the first direction,
- generating a first electrical signal related to the sensed first ultrasonic signal,
- generating a first reference signal,
- comparing the first electrical signal and the first reference signal and deriving a first derived value or signal from the comparison,
- providing, subsequent to the generation of the first electrical signal and based on a second input signal, a second ultrasonic signal having a second frequency and propagating in a second direction along the flow passage, the second direction being at least substantially opposite the first direction,
- generating a second reference signal,
- receiving the second ultrasonic signal having passed said part of the flow passage in the second direction,
- generating a second electrical signal related to the sensed second ultrasonic signal,
- comparing the second electrical signal and the second reference signal and determining a second derived value or signal from the comparison,
- determining a measured flow rate value of the medium in the flow passage from the first and the second derived values or signals and from a known relation between the frequencies and/or phases of the first and second reference signals and/or from a known relation between the frequencies and/or phases of the first and second reference signals,
wherein each of the first and second reference signals and/or each of the first and second input signals are derived on the basis of the first and/or the second electrical signal.

In a sixth aspect, the invention relates to a method of operating the flow meter of the third aspect of the invention wherein the generator means are adapted to be switched on and of without to any substantial degree altering an output impedance thereof. This method comprises:
(1)- switching on the generator means,
(2)- opening the second switching means and closing the first switching means so as to generate, using the first ultrasound generating means, a first ultrasonic signal propagating in a first direction along the flow passage,
(3)- switching the generating means off, opening the first switching means, and closing the second switching means,
(4)- receiving, using the second ultrasound generating means, the first ultrasonic signal having passed said part of the flow passage and generating a first related electrical signal,
(5)- transmitting the generated first related electrical signal to the deriving means,
(6)- deriving in the deriving means a first derived value or signal relating to the generated first related electrical signal,
(7)- switching on the generator means,
(8)- opening the first switching means and closing the second switching means so as to generate, using the second ultrasound generating means, a second ultrasonic signal propagating in a second direction along the flow passage, the second direction being substantially opposite the first direction,
(9)- switching the generating means off, opening the second switching means, and closing the first switching means,
(10)- receiving, using the first ultrasound generating means, the second ultrasonic signal having passed said part of the flow passage and generating a second related electrical signal,
(11)- transmitting the generated second related electrical signal to the deriving means,
(12)- deriving in the deriving means a second derived value or signal relating to the generated second related electrical signal,
(13)- calculating or determining, based on the first and second derived values or signals and using the calculating or determining means, a flow rate of the medium flowing through the flow passage.

In order to also obtain the advantages of the fourth and fifth aspects as described in relation to the first and second aspects, the method preferably further comprises:
- before step (6), generating a first reference signal,
- the deriving step (6) comprising comparing the first electrical signal and the first reference signal and deriving a first derived value or signal from the comparison,
- before step (12), generating a second reference signal,
- the deriving step (12) comprising comparing the second electrical signal and the second reference signal and determining a second derived value or signal from the comparison,
- the calculating or determining step (13) comprising calculating or determining a measured flow rate value of the medium in the flow passage from the first and the second derived values or signals and from a known relation between a frequency and/or phase of the first and second reference signals and/or from a known relation between a frequency and/or phase of the first and second reference signals.

The method of the fourth aspect preferably further comprises deriving each of the first and second reference signals and/or each of the first or second input signals on the basis of one or more of the electrical signals generated by the receiving means and related to ultrasonic signals transmitted in one or more of the substantially opposite directions along the flow path.

As described above, the first reference signal may have a frequency being an integer times that of the second reference signal, the second reference signal may have a frequency being an integer times that of the first reference signal, or the first and the second reference signals may have substantially equal frequencies. In the last situation, a phase difference between the first and second reference signals is preferably known. Preferably, the first and second reference signals are substantially identical.

Usually, each ultrasound generating means generates ultrasound signals as a response to an input signal and wherein a frequency of the ultrasound signal corresponds to a frequency of the input signal.

Typically, the input signals for the individual ultrasound generating means are generated alternately.

In order to be able to use a phase difference detection method, the first reference signal is preferably generated having a frequency substantially equal to a frequency of the first electrical signal, and the second reference signal is preferably generated having a frequency substantially equal to a frequency of the second electrical signal.

In that situation, the first derived value or signal preferably relates to a phase difference between the first electrical signal and the first reference value, and the second derived value or signal preferably relates to a phase difference between the second electrical signal and the second reference value.

In that situation, the measured flow rate value of the medium in the flow passage may be calculated or determined by subtracting the first and second derived values or signals and multiplying a resulting value by a pre-determined parameter.

As described above, one or more candidate signals may be provided having substantially the same frequency or a number of different frequencies. A number of the candidate signals may have substantially the same frequency and of which at least some have different phases.

Then, the first reference signal may be selected as one of the received candidate signals, such as the candidate signal having a phase and a frequency corresponding to those of the first electrical signal.

In one example, the input signals, the reference signals and the candidate signals substantially are square wave signals alternatively shifting between their lower value and their higher value.

In that example, the selected candidate signal may be that which, starting at a point in time where the first electrical signal shifts from its lower value to its higher value, is the next of the candidate signals to shift from its lower value to its higher value or vice versa.

In another example, the input signals, the reference signals and the candidate signals may have well-defined maxima and minima and alternately shift therebetween, whereby the selected candidate signal may be that which, starting at a point in time wherein the first electrical signal attains a maximum or a minimum, is the next of the candidate signals to attain its maximum or minimum or vice versa.

In addition to or alternatively to the providing of the candidate signals, a high frequency signal may be provided having a frequency substantially higher than that of the first electrical signal, and the first reference signal may be generated on the basis of the high frequency signal.

Thus, the high frequency signal may have a high frequency being substantially an integer times that of the first electrical signal, and the first reference signal may be generated by frequency division of the high frequency signal.

In a first example, the input signals, the reference signals and the high frequency signal may be substantially square wave signals alternately shifting between their lower value and their higher value.

In fact, it may be desired that a number of candidate signals may be generated from the high frequency signal.

In the first example, the selected candidate signal may be that which, starting at a point in time where the first electrical signal shifts from its lower value to its higher value, is the next of the candidate signals to shift from its lower value to its higher value or vice versa.

In another example, the input signals, the reference signals and the high frequency signal may have well-defined maxima and minima and alternately shift therebetween.

A number of candidate signals may be generated from the high frequency signal, and the selected candidate signal may be that which, starting at a point in time wherein the first electrical signal attains a maximum or a minimum, is the next of the candidate signals to attain its maximum or minimum or vice versa.

In the following, a preferred embodiment of a flow meter incorporating both aspects of the invention will be described with reference to the appended drawing, wherein
- Fig. 1 illustrates, in the form of a block diagram, the electronic setup of the preferred flow meter and
- Fig. 2 is a cross-sectional view through a preferred transducer for use in the present invention.

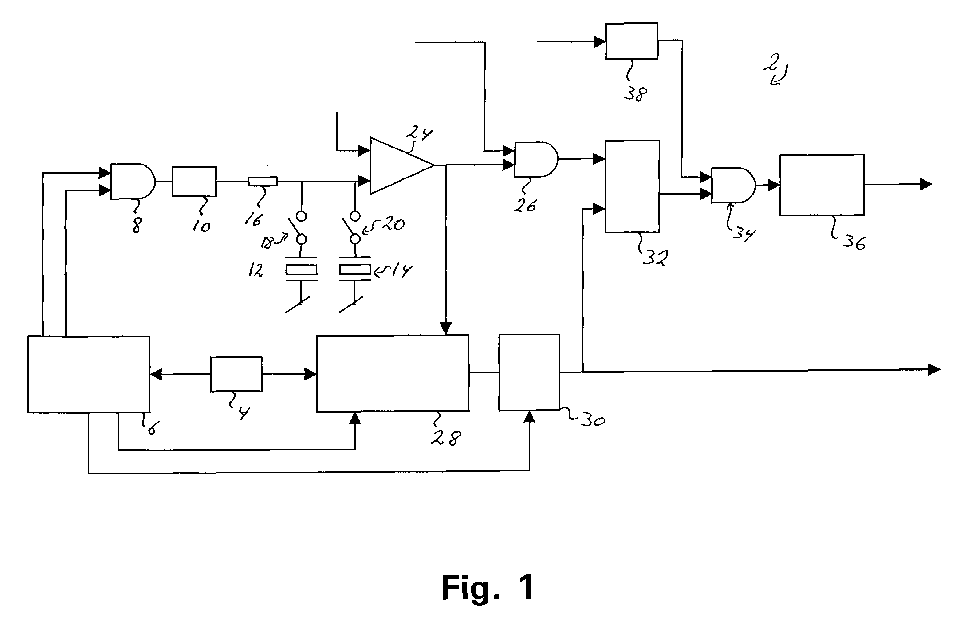

In Fig. 1, the flow meter 2 comprises a high frequency oscillator 4 generating a 4 MHz square wave signal which is fed into a microprocessor 6. In the microprocessor 6, the high frequency signal is frequency divided into a 1 MHz signal which is transferred to one of the two inputs of a NOR gate 8. In addition to the 1 MHz signal, the microprocessor also generates a start/stop signal fed into the other input of the gate 8 so as to control the output of the gate 8. When the start/stop signal is low, the 1 MHz signal is transferred through the gate 8 to a high pass filter 10, which removes any DC-component output from the gate 8.

When the start/stop signal from the microprocessor is high, the gate 8 will output a constant, low signal, and thereby block the 1 MHz signal.

In order to generate the ultrasound signals and to receive these in the flow passage (not illustrated), two ultrasound transducers 12 and 14 are positioned in the flow passage (not illustrated) in a manner so that they are able to generate ultrasound signals directly towards each other. In addition, the transducers 12 and 14 are able to function as ultrasound receivers. Transducers of this type have long been known in the prior art.

Before feeding the output of the high pass filter 10 into one of the transducers 12 or 14, the signal is transmitted through a resistor 16. Switches 18 and 20 are controlled by the microprocessor 6, whereby it may be selected which of the transducers 12 or 14 should receive the signal output from the resistor 16 and thereby act as a transmitter of ultrasound signals.

In the present embodiment, the switches 18 and 20 will be operated in a manner so that only one transducer 12 or 14 will act as a transmitter at a given point in time. As described above, this will reduce or totally remove the problem caused by reflections of ultrasound signals emitted from the transducer and reflected in the vicinity thereof so as to return when the same transducer is to act as a receiver.

The switches 18 and 20 are operated in a manner so that only one, 18 or 20, is closed at a time, so that the corresponding transducer 12 or 14, respectively, will act as an ultrasound generator when receiving a signal emitted from the resistor 16.

Having launched, using the transducer 12, ultrasound signals into the flow passage (not illustrated), the switch 18, which is closed during generation of the ultrasound signals, will be opened and the other switch 20 will be closed in time before the ultrasound signals are received by the other transducer 14 - and vice versa. Corresponding electrical signals generated by the transducer 14 are subsequently transferred through the closed switch 20 to an electrical conductor 22 interconnecting the generator means (constituted by the oscillator 4, the microprocessor 6, the gate 8, the filter 10 and the resistor 16) to an electronic circuit means adapted to receive the electrical signals and to eventually calculate or determine a measured flow value of the medium in the flow passage (not illustrated).

In the present embodiment, the received electrical signal generated by the transducer receiving the ultrasound signals are input to an input of a phase detector 32 for detecting the phase difference between the received electrical signal and a reference signal input on another input of the phase detector 32.

In addition, the received signals are fed into a synchronizing circuit 28 which also receives the 4 MHz square wave signal from the oscillator 4 and a start/stop signal from the microprocessor 6. The operation of the circuit 28 is to generate, from the 4 MHz signal, a 1 MHz signal (by frequency division) corresponding to that of the 1 MHz signals derivable from the 4 MHz signal having a phase corresponding the best to the received 1 MHz signal output from the receiving transducer 12 or 14.

In the present embodiment, the frequency division performed in the circuit 28 is synchronized by selecting the first low-to-high flange of the 4 MHz signal following a low-tohigh flange of the received signal. Having determined which flange portions of the 4 MHz signal should correspond to flange portions of the desired 1 MHz reference signal, standard frequency division may be utilized. The then following frequency division is easily performed, as the flanges of the 4 MHz signal may be used for determining those of the 1 MHz signal. Generation of the resulting 1 MHz signal may be provided with quite simple electronic digital gates.

Actual selection of these flange portions and thereby the synchronization of the circuit 28 is performed by the microprocessor 6.

The 1 MHz reference signal generated by the circuit 28 is transferred to a controlling circuit 30 also receiving a signal from the micro processor 6. The signal from the processor 6 relates to the number of pulses to be used in the phase detector circuit 32 when detecting the phase difference between the 1 MHz reference signal generated in the circuit 28 and the signal received.

The circuit 30 provides a reset signal for the phase detector 32 for resetting the phase detector 32 when the desired number of pulses have been used in the detector 32.

A preferred measurement of a flow of a medium is conducted as follows:

In order to determine the reference signal to be used in two standard measurements (one signal with ultrasonic signals travelling downstream and one with ultrasound signals travelling upstream), a first measurement is performed where the microprocessor 6 starts frequency dividing the 4 MHz signal from the oscillator 4 and transmits the 1 MHz signal to the NOR-gate 8. Subsequently, the start/stop signal also transmitted from the microprocessor 6 to the NOR-gate 8 is shifted from high to low so that the 1 MHz signal from the microprocessor 6 is transmitted through the gate 8, the filter 10 and the resistor 16 to the transducer 12 positioned downstream in the flow passage (not illustrated) in relation to the transducer 14. Naturally, the switch 18 is closed in order to have the transducer 14 output the ultrasound signal. A small period of time later, but before the ultrasound signal has reached the transducer 14, the gate 8 is set to block the signal from the microprocessor 6, the microprocessor 6 stops dividing the signal from the generator 4, the switch 18 is opened and the switch 20 is closed in order to have the transducer 14 act as a receiver. The received signal generated by the transducer 14 when receiving the ultrasound signal is transmitted to the electrical conductor 22 and to an input of the phase detector 32. Simultaneously, the electrical signal is transmitted via the electrical conductor 22 to the synchronizing circuit 28 in which the above-described determination and generation of the reference signal is performed. Subsequently, the generation of the reference signal is maintained for use in the following two "real" measurements.

It should be noted that the results from the phase detector 32, pulse amplifier 36 and the micro processor 6 are not used in this connection, as there is not performed any measurement.

Subsequent to this preliminary measurement, the two standard measurements may be performed in which the transducers 12 and 14 alternately receive the 1 MHz signal through the gate 8, the filter 10 and the resistor 16 and where the other transducer 14 or 12 receives the signal, transmits it to the phase detector 32, and where the microprocessor 6 simultaneously instructs the circuit 30 to transmit a predetermined number of pulses, such as 12 pulses, of the reference signal generated in the circuit 28 to the phase detector 32 and information relating to this number of pulses to the microprocessor (not illustrated).

In the phase detector 32, the 12 pulses from the circuit 30 are correlated with the same number of pulses in the received signal from the electrical conductor 22, and the phase detector 32 outputs 12 pulses, each corresponding to the phase difference between each of the corresponding pulses of the reference signal and of the received signal. The pulses generated by the phase detector 32 are transmitted to the pulse amplifier 36, such as that described in Danish utility model No. 9400101, wherein a single pulse is generated having a width being 1000 times the accumulated width of the twelve pulses generated by the phase detector 32. This resulting pulse is transferred to the microprocessor 6 for the final determination of the flow of the medium.

Subsequent to this measurement, the microprocessor 6 again starts frequency dividing the signal from the oscillator 4 and the gate 8 is instructed to again transmit the signal through the filter 10, the resistor 16 and this time to the transducer 14 through the closed switch 20. As described before, the switches again shift, the microprocessor 6 stops frequency dividing, the gate 8 is instructed to block any signals, the transducer 12 now acts as receiver, and, eventually, the pulse amplifier 36 generates a new pulse again being thousand times wither than the accumulated width of the twelve pulses generated by the phase detector 32.

In the microprocessor 6, the width of the two pulses generated by the pulse amplifier 36 are determined and subtracted. The result of this subtraction is a measure directly relating to the transmission time difference between the two ultrasound signals travelling in the medium, and thus to the velocity of the flow of the medium. Knowing the dimensions of the flow passage, such as e.g. a tube in which the medium flows, standard mathematics will result in a measure of the flow of the medium.

In this calculation, naturally, information relating to the number of pulses used in the phase detector 32 and the pulse amplifier 36 is required in order to obtain a correct value of the flow. As described above, this information is provided by the circuit 30 and transmitted to the microprocessor 6.

As the signals output from the receiving transducer is not a square signal but more like a sine-like signal, a comparator 24 is preferably introduced for generating a square signal from the sine-like signal. The comparator 24 receives a reference voltage defining the boundary between the lower and the higher values of the square signal. Preferably, this reference voltage is 0.

In order to be able to calibrate the present system, it is presently preferred to introduce, in the receiving means via an adder 26, a single pulse having a predetermined width. Transmitting this pulse through the phase detector 32 and the pulse amplifier 36 would result in a pulse having a given width. On the basis of the relationship between the predetermined width and the resulting width of the pulse from the pulse amplifier 36, the system may be calibrated.

It should be noted that the use of the calibration pulse and the electrical element 26 are not crucial to the operation of the present instrument. In order to merely perform measurements of flow values, the electrical conductor may be introduced directly into an input on the detector 32.

As it is well-known, the temperature of the flowmeter and of the medium interacts strongly with measurements of this type. Therefore, it is presently preferred to also use at least part of this flowmeter for performing temperature measurements. At present, a temperature measurement is performed using a temperature sensor 38 comprising a PTC-resistor (not shown) having a positive temperature characteristic (i.e. a resistance increasing for increasing temperature) and a capacitor (not shown). Generating a square pulse over the resistor (not shown) and the capacitor (not shown) would result in a de/charging of the capacitor (not shown) depending of the resistance of the resistor and thereby on the temperature.

This resulting pulse is subsequently transformed into a square pulse by standard means (not shown) and transmitted into the pulse amplifier 36 and thereby to the microprocessor 6, where the temperature may be determined from the width of the pulse and on the basis of a standard calibration. Subsequently, this temperature measurement may take part of the measurements as is known per se.

It should be noted that, naturally, a temperature measurement can not be performed at the same time as a flow measurement is performed. Inputting the resulting square pulse into the pulse amplifier 36 may be provided by incorporating a logical gate 34, such as an adder, between the phase detector 32 and the pulse amplifier 36. Controlling this gate 34 will decide which signal of that from the temperature measuring means 38 and that from the phase detector 32 is to proceed to the pulse amplifier 36.

The present setup gives a number of advantages especially due to the fact that, as opposed to the above-mentioned, the upstream and downstream measurements may involve the use of different reference signals. By providing two circuits 28 comprising the same inputs, one circuit 28 may be used for determining and generating reference signal for the upstream measurement and the other for the downstream measurement. In the above embodiment, it is described how a 4 MHz signal is divided into a 1 MHz signal. Naturally, four 1 MHz signals are easily derived from the 4 MHz signals in a manner so that the 1 MHz signals have different phases. In the amended embodiment using two reference signals, the synchronizing circuits 28 may further comprise means for not only generating the reference signal having a phase corresponding to that of the received signal generated by the receiving transducer, but they may also comprise means for identifying which of the above e.g. four possible 1 MHz signals obtainable from the 4 MHz signal is actually used as the reference signal for the upstream and the downstream measurements, respectively.

On the basis of the pulses generated by the pulse amplifier 36 and information relating to the phase difference between the two references used, a flow measurement may easily be obtained.

The advantage of this amended embodiment is that the phase difference between the received signals and the reference signals may be smaller, whereby the demands as to the dynamic range of the pulse amplifier 36 may be reduced.

The dynamic range of the detector is limited to the maximum 2n minus the maximum phase difference possible between the signal received from the receiving transducer and the reference signal chosen (in the above example n/2). This range may be extended if the maximum phase difference can be reduced. This maximum phase difference may be reduced to n/4 by inverting the 4 MHz signal transmitted to processor 6, whereby the signal fed into the transmitting transducer is phase shifted n/4. Inverting this signal may be performed by e.g. a simple XOR operation. This reduction of the maximum phase difference may be obtained by, having determined the reference signal, determining the phase difference. If this phase difference is larger than n/4, the 4 MHz signal is inverted, whereafter a new measurement may be performed leading to a lower maximum phase difference and, consequently, a larger dynamic area of the detector.

In an alternative embodiment, the reference signal may be predetermined and not altered during a measurement. Adaption of the phase difference may then be performed solely by adapting the phase of the 1 MHz signal output from the processor 6. Naturally, this signal may be generated in the same manner as it is described performed in the electronics 28 as well as inverted as described above. In this manner, the same advantages as the above-mentioned may be obtained.

Another advantage provided by setups of this type is the fact that the frequency of the ultrasound signals may be changed relatively easily by changing the frequency of the oscillator 4, and, naturally, changing the operation and timing of the microprocessor 6.

A limitation with fixed-frequency flowmeters is the fact that these instruments only with great difficulties are able to measure phase differences larger than 2n. This means that transmission time differences in the two directions larger than 1 µs for 1 MHz signals can typically not be measured, simply because the system is not able to determine whether there is a very small flow or whether the flow is very large. This problem may be avoided by reducing the frequency of the oscillator 4, such as to 2 MHz. This will, using the above-described frequency division by a factor of four in the circuits 28 and 6, cause the transducers 12 and 14 to emit and detect 500 kHz signals. This again means that the system is now able to handle transmission time differences of up to 2 µs. Hence, this changing of the frequency would increase the dynamic area of the whole flowmeter.

In addition, in an alternative embodiment, the upstream and downstream measurement may be performed with different frequencies. This may necessitate the use of different transducers for these measurements. This, however, is not considered a problem, as more than two transducers may easily be provided on the electrical conductor 22 while still obtaining the advantages of the invention.

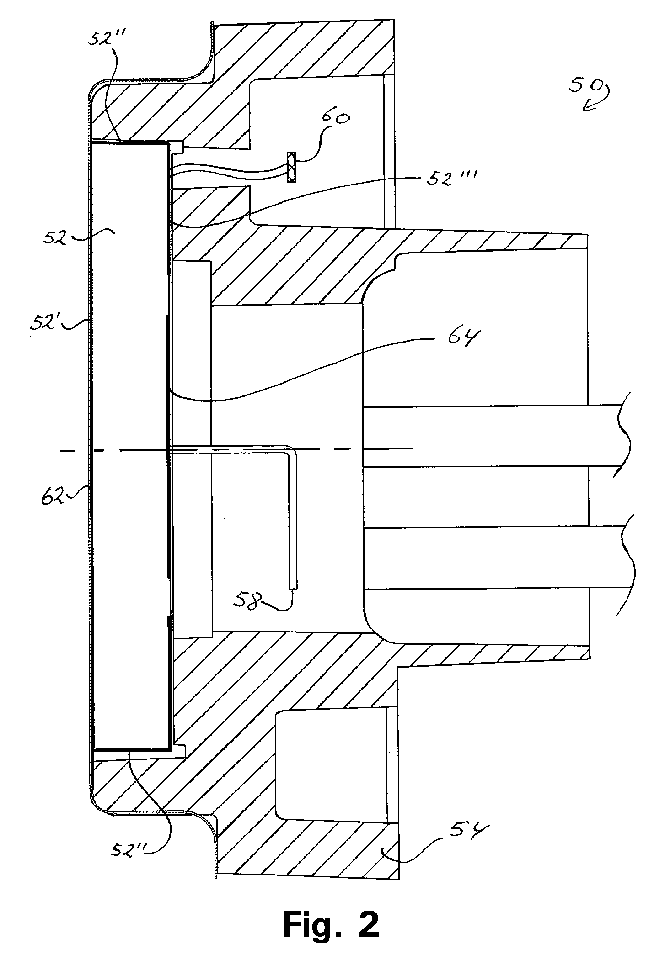

Turning now to Fig. 2, a cross sectional view of a preferred transducer for use in the present system is illustrated.

Another advantage of the setup of the transducers 12 and 14, the electrical conductor 22 and the switches 18 and 20 is the fact that the impedance of the setup is the same when a given switch is opened and the other closed - that is - independently of whether the operative transducer acts as transducer or detector. In this type of setup, any variations in impedance in the transducer are automatically compensated for.

Therefore, less stringent demands may be put to the transducer.

Providing electrical contacts to the vibrating element, typically a piezo-electric element, of the transducer has long been troublesome in that the element is typically a ceramic material and should be able to vibrate, whereby e.g. soldering is not easily performed. In typical elements of this type, one soldering is to be positioned close to the center of the element. This soldering should be made quite small and still quite strong. Providing a too large soldering will provide a large additional mass to the element and therefore influence the vibration thereof.

As is typical for transducers, the transducer 50 of Fig. 2 has a vibrating element 52, such as a piezo-electric element, held in a transducer housing 54 by a steel membrane 56 and an adhesive layer 58.

As is typical, the element 52 comprises a first electrode 62 consisting of a metallic layer over the side 52' pointing away from the transducer housing 54, over the peripheral edges 52'' of the element 52 and along the peripherally outer parts of the side 52''' of the element 52 pointing towards the transducer housing 54. A second electrode 64 consists of a metallic layer covering the central portions of the side 52"' .

In order to provide electrical contacts from the electronics (such as from the filter 16 in Fig. 1) to the element 52, springs 58 and 60 are provided in the housing 54 and for contacting the first and the second electrodes, respectively.

Using the springs 58 and 60 in stead of the typical solder-based interconnections has the advantage that the manufacturing of the transducer 50 is made faster and cheaper. These interconnections may, however, vary with time. However, due to the present setup, this variation is automatically compensated for.

In fact, using the present setup will compensate for different acoustic loads of the transducers such as loads caused by variations in the pressure of the medium, caused by variations in the manner in which the piezoelectric element is held in the transducer, such as variations in tension created by different temperature expansion coefficients of the different materials therein and due to varying temperatures of the medium.

### EXAMPLE an alternative method of determining the phase difference between the first and second electrical signals

Instead of providing one or more signals directly used as the reference signals, an alternative method may be used wherein a high-frequency signal is used for sampling the first and second electrical signals and for generating a sine-like signal to be used in the determination of the phase difference between the first and electrical signals.

In the present Example, the first and second electrical signals preferably have a frequency of 1 MHz and the high-frequency signal a multiplum of 1 MHz, such as 10-40 MHz, preferably 16 MHz.

Using this high-frequency signal for timing the sampling of a part of the first electrical signal, the information obtained may be used in a purely digital determination of the phase difference between the first electrical signal and a reference signal represented by the high-frequency signal and the starting time of the sampling.

This determination may be performed in a number of manners, such as using a Fourier transformation. A Fourier transformation generates an amplitude spectrum (as a function of frequency) and a phase spectrum (as a function of frequency) of the sampled signal. From the phase spectrum, the phase relating to a frequency of 1 MHz may be derived.

However, as only the 1 MHz information in the sampled signal is of interest (in the present case where the first electrical signal has a frequency of 1 MHz), a DFT (Discrete Fourier Transformation) may be used. This method is computationally lighter, as it may be made to only generate e.g. the 1 MHz phase information and not also a large amount of abundant information (as the Fourier transformation would in this situation) .

This DFT will give phase information relating to 1) the sampled signal and 2) a 1 MHz signal represented by the high-frequency signal and the starting time of the sampling. If the high-frequency signal is the same (same frequency) and the starting time is the same from measurement to measurement, the phase differences obtained from the first and the second electrical signals may be subtracted to obtain a phase difference between these signals.

Preferably, in order to ensure that the same starting point is chosen in all measurements, this is defined from the electrical signal to be sampled. Thus, a well-defined portion, such as a portion starting with a local maximum, a local minimum or a zero-crossing, is sampled, stored and used as the basis for the determination of the phase difference.

Having performed this determination using the first and the second electrical signals, the determined phase differences (which relate to approximately the same "reference signal") may be subtracted to obtain the phase difference between the first and the second electrical signals.

Thus, as reference signals, not only standard signals may be used. Also signals of the above type performing the same task may be provided in order to provide a reference against which a phase difference may be determined

In the following, a manner of implementing the preferred DFT is given:

Firstly, this high-frequency signal is used for timing the sampling of a part of the first electrical signal. This sampling is started at a well-defined point of time in relation to the electric signal to be sampled. The sampled values are stored in a first suitable memory.

In a second suitable storage, a number of values, such as 16 values describing a sine-shaped curve, are stored. It is clear that these values, if read continuously from the second storage means in a manner timed by the 16 MHz signal will generate a signal corresponding to a 1 MHz signal.

A phase correlation between the signals stored in the first and the second storage means may be determined by multiplying the values two and two (first value to the first value, the second to the second, etc. etc.), and finally adding the values obtained. The final result will, as the frequencies of the two stored signals are at least approximately the same, relate to the overlap of the signals - and thus the sine to their phase difference - and the amplitude of the signals.

The same operation is performed with the same stored part of the first electrical signal and the signal stored in the first storage means - but this time phase shifted by ½ period. From this operation, a second value is obtained relating to the cosine to the phase shift - and the same amplitude.

The two values obtained may now be used for eliminating the unknown amplitude from the equations and separating and determining the phase shift between the signal represented between the information in the first storage means and the first electrical signal.

A similar operation may be performed in relation to the second electrical signal which may be sampled and processed in the same manner using the same high-frequency signal and the information in the first storage means. From this operation, a second phase difference may be determined between the signal represented between the information in the first storage means and the second electrical signal.

From these two phase differences, the phase difference between the first and the second electrical signals may be determined - without the direct use of one or more reference signal.

This method has the advantage that the analogous electronics typically used for determining the phase differences (which are typically very small) may be replaced by digital electronics providing a better precision.

## Claims

1. A flow meter for measuring a medium flow through a flow passage defined therein, the flow meter comprising
- ultrasound generating means for generating ultrasonic signals based on input signals having a frequency of 100 kHz or more and being supplied thereto and for directing ultrasonic signals in substantially opposite directions along at least part of the flow passage,
- means for receiving ultrasonic signals having passed said part of the flow passage and for generating electrical signals related to the ultrasonic signals received,
- means for generating a first reference signal,
- means for deriving a first derived value or signal on the basis of the first reference signal and a first electrical signal generated by the receiving means and being related to an ultrasonic signal, which is based on a first input signal and which is transmitted in a first of the substantially opposite directions along the flow passage,
- means for generating a second reference signal having a frequency and/or phase different from those of the first reference signal,
- means for deriving a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction, and
- means for calculating or determining a measured flow rate of the medium through the flow passage based on the first and second derived values or signals and based on a known relationship between the frequencies and/or phases of the first and second references and/or based on a known relationship between the frequencies and/or phases of the first and second input signals.

2. A flow meter according to claim 1, further comprising means for deriving each of the first and second reference signals and/or each of the first or second input signals on the basis of one or more of the electrical signals generated by the receiving means and related to ultrasonic signals transmitted in one or more of the substantially opposite directions along the flow path.

3. A flow meter for measuring a medium flow through a flow passage defined therein, the flow meter comprising
- ultrasound generating means for generating ultrasonic signals based on input signals supplied thereto and for directing ultrasonic signals in substantially opposite directions along at least part of the flow passage,
- means for receiving ultrasonic signals having passed said part of the flow passage and for generating electrical signals related to the ultrasonic signals received,
- means for generating a first reference signal,
- means for deriving a first derived value or signal on the basis of the first reference signal and a first electrical signal generated by the receiving means and being related to an ultrasonic signal, which is based on a first input signal and which is transmitted in a first of the substantially opposite directions along the flow passage,
- means for generating a second reference signal,
- means for deriving a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction,
- means for calculating or determining a measured flow rate of the medium through the flow passage based on the first and second derived values or signals and based on a known relationship between the frequencies and/or phases of the first and second reference signals and/or based on a known relationship between the frequencies and/or phases of the first and second input signals, and
- means for deriving each of the first and second reference signals and/or each of the first and second input signals on the basis of one or more of the electrical signals generated by the receiving means and related to ultrasonic signals transmitted in one or more of the substantially opposite directions along the flow path.

4. A flow meter for measuring a medium flow through a flow passage defined therein and comprising
- at least two ultrasound generating means for generating ultrasound signals based on input signals supplied thereto, for directing such signals in substantially opposite directions along at least part of the flow passage, and for receiving ultrasonic signals having passed said part of the flow passage and generating related electrical signals,
- generator means having an output for outputting input signals for the ultrasound generating means,
- first means for transmitting the input signals from the output of the generator means to the ultrasound generating means,
- deriving means for deriving values or signals based on the related electrical signals, the deriving means having an input arranged to receive the related electrical signals,
- calculating or determining means being adapted to calculate or determine, based on derived values or signals, a flow rate of the medium flowing through the flow passage, and
- second means for transmitting the related electrical signals from the ultrasound generating means to the input of the calculating or determining means,
**characterized in that** the first and the second transmitting means comprise:
- at least one first electrical conductor means interconnecting the output of the generator means and the input of the deriving means,
- second electrical conductor means for electrically interconnecting each ultrasound generating means to at least one of the first electrical conductor means, and
- for each ultrasound generating means, at least one switching means for enabling or preventing electrical current flow between the at least one first electrical conductor means and the actual ultrasound generating means through the second electrical conductor means electrically interconnecting the actual ultrasound generating means to the at least one of the first electrical conductor means.

5. A flow meter according to claim 4, wherein the generator means are adapted to be switched on and off without to any substantial degree altering an output impedance thereof.

6. A flow meter according to claim 4 or 5, additionally comprising:
- means for generating a first reference signal,
- means for generating a second reference signal,
the deriving means comprising:
- means for deriving a first derived value or signal on the basis of the first reference signal and a first electrical signal generated by the receiving means and being related to an ultrasonic signal, which is based on a first input signal and which is transmitted in a first of the substantially opposite directions along the flow passage, and
- means for deriving a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction,
the calculating or determining means being adapted to calculate or determine a flow rate of the medium flowing through the flow passage, based on the first and second derived values or signals and based on a known relationship between the frequencies and/or phases of the first and second references and/or based on a known relationship between the frequencies and/or phases of the first and second input signals.

7. A flow meter according to any of claims 4-6, further comprising means for deriving each of the first and second reference signals and/or each of the first or second input signals on the basis of one or more of the electrical signals generated by the receiving means and related to ultrasonic signals transmitted in one or more of the substantially opposite directions along the flow path.

8. A flow meter according to any of claims 1, 2, 3, 6 or 7, wherein the means for generating the first reference signal are adapted to generate the first reference signal with a frequency being an integer times a frequency of the second reference signal.

9. A flow meter according to any of claims 1, 2, 3, 6 or 7, wherein the means for generating the first and second reference signals are adapted to generate the second reference signal with a frequency being an integer times a frequency of the first reference signal.

10. A flow meter according to any of claims 1, 2, 3, 6 or 7, wherein the means for generating the first and second reference signals are adapted to generate the first and the second reference signals with substantially identical frequencies.

11. A flow meter according to claim 10, wherein the means for generating the first and second reference signals are adapted to generate the first and the second reference signals such that a phase difference between the first and second reference signals is known.

12. A flow meter according to claim 3 or 6, wherein the means for generating the first and second reference signals are adapted to generate substantially identical first and second reference signals.

13. A flow meter according to any of claims 1-3 or 6-9, wherein the means for deriving the first and the second derived value or signal are adapted to generate a first derived value or signal relating to a phase difference between the first electrical signal and the first reference signal and a second derived value or signal relating to a phase difference between the second electrical signal and the second reference signal.

14. A flow meter according to claim 13, wherein the calculating or determining means are adapted to calculate or determine a measured flow rate value of the medium in the flow passage by subtracting the first and the second derived values or signals and multiplying a resulting value by a predetermined parameter.

15. A flow meter according to any of the preceding claims, furthermore comprising means for providing one or more candidate signals having substantially the same frequency or having a number of different frequencies.

16. A flow meter according to claim 15, wherein the means for generating the first reference signal are adapted to generate the first reference signal by selecting one of the candidate signals.

17. A flow meter according to claim 16, wherein the means for generating the first reference signal are adapted to select a generated or received candidate signal having a phase corresponding to that of the first electrical signal.

18. A flow meter according to claim 15, further comprising means for providing a high frequency signal having a frequency substantially higher than that of the first electrical signal, and wherein the means for generating the first reference signal are adapted to generate the first reference signal on the basis of the high frequency signal.

19. A flow meter according to claim 18, wherein the means for providing the high frequency signal are adapted to provide a high frequency signal having a frequency being substantially an integer times a frequency of the first electrical signal, and wherein the means for generating the first reference signal comprise a frequency division means for receiving the high frequency signal and for outputting the first reference signal having a frequency substantially equal to that of the first electrical signal.

20. A flow meter according to claim 18 or 19, wherein the means for generating the input signals, the means for generating the reference signals and the means for providing the high frequency signal are adapted to generate or provide square wave signals alternately shifting between their lower value and their higher value.

21. A method for measuring the flow of a medium flowing through a flow passage, the method comprising:
- providing, based on a first input signal, a first ultrasonic signal having a first frequency and propagating in a first direction along the flow passage,
- receiving the first ultrasonic signal having passed said part of the flow passage in the first direction,
- generating a first electrical signal related to the sensed first ultrasonic signal,
- generating a first reference signal,
- comparing the first electrical signal and the first reference signal and deriving a first derived value or signal from the comparison,
- providing, subsequent to the generation of the first electrical signal and based on a second input signal, a second ultrasonic signal having a second frequency and propagating in a second direction along the flow passage, the second direction being at least substantially opposite the first direction,
- generating a second reference signal having a frequency and/or phase different from a frequency or phase of the first reference signal,
- receiving the second ultrasonic signal having passed said part of the flow passage in the second direction,
- generating a second electrical signal related to the sensed second ultrasonic signal,
- comparing the second electrical signal and the second reference signal and determining a second derived value or signal from the comparison,
- determining a measured flow rate value of the medium in the flow passage from the first and the second derived values or signals and a relation between the frequencies and/or phases of the first and second reference signals and/or a relation between the frequencies and/or phases of the first and second input signals.

22. A method according to claim 21, wherein the first and second reference signals and/or the first and second input signals are derived on the basis of the first and/or the second electrical signal.

23. A method for measuring the flow of a medium flowing through a flow passage, the method comprising:
- providing, based on a first input signal, a first ultrasonic signal having a first frequency and propagating in a first direction along the flow passage,
- receiving the first ultrasonic signal having passed said part of the flow passage in the first direction,
- generating a first electrical signal related to the sensed first ultrasonic signal,
- generating a first reference signal,
- comparing the first electrical signal and the first reference signal and deriving a first derived value or signal from the comparison,
- providing, subsequent to the generation of the first electrical signal and based on a second input signal, a second ultrasonic signal having a second frequency and propagating in a second direction along the flow passage, the second direction being at least substantially opposite the first direction,
- generating a second reference signal,
- receiving the second ultrasonic signal having passed said part of the flow passage in the second direction,
- generating a second electrical signal related to the sensed second ultrasonic signal,
- comparing the second electrical signal and the second reference signal and determining a second derived value or signal from the comparison,
- determining a measured flow rate value of the medium in the flow passage from the first and the second derived values or signals and from a known relation between the frequencies and/or phases of the first and second reference signals and/or from a known relation between the frequencies and/or phases of the first and second reference signals,
wherein each of the first and second reference signals and/or each of the first and second input signals are derived on the basis of the first and/or the second electrical signal.

24. A method of operating the flow meter of claim 5, the method comprising:
(1)- switching on the generator means,
(2)- opening the second switching means and closing the first switching means so as to generate, using the first ultrasound generating means, a first ultrasonic signal propagating in a first direction along the flow passage,
(3)- switching the generating means off, opening the first switching means, and closing the second switching means,
(4)- receiving, using the second ultrasound generating means, the first ultrasonic signal having passed said part of the flow passage and generating a first related electrical signal,
(5)- transmitting the generated first related electrical signal to the deriving means,
(6)- deriving in the deriving means a first derived value or signal relating to the generated first related electrical signal,
(7)- switching on the generator means,
(8)- opening the first switching means and closing the second switching means so as to generate, using the second ultrasound generating means, a second ultrasonic signal propagating in a second direction along the flow passage, the second direction being substantially opposite the first direction,
(9)- switching the generating means off, opening the second switching means, and closing the first switching means,
(10)- receiving, using the first ultrasound generating means, the second ultrasonic signal having passed said part of the flow passage and generating a second related electrical signal,
(11)- transmitting the generated second related electrical signal to the deriving means,
(12)- deriving in the deriving means a second derived value or signal relating to the generated second related electrical signal,
(13)- calculating or determining, based on the first and second derived values or signals and using the calculating or determining means, a flow rate of the medium flowing through the flow passage.

25. A method according to claim 24, the method further comprising:
- before step (6), generating a first reference signal,
- the deriving step (6) comprising comparing the first electrical signal and the first reference signal and deriving a first derived value or signal from the comparison,
- before step (12), generating a second reference signal,
- the deriving step (12) comprising comparing the second electrical signal and the second reference signal and determining a second derived value or signal from the comparison,
- the calculating or determining step (13) comprising calculating or determining a measured flow rate value of the medium in the flow passage from the first and the second derived values or signals and from a known relation between a frequency and/or phase of the first and second reference signals and/or from a known relation between a frequency and/or phase of the first and second reference signals.

26. A method according to claim 24 or 25, further comprising deriving each of the first and second reference signals and/or each of the first or second input signals on the basis of one or more of the electrical signals generated by the receiving means and related to ultrasonic signals transmitted in one or more of the substantially opposite directions along the flow path.

27. A method according to any of claims 21-23, 25 or 26, wherein a phase difference between the first and second reference signals is known.

28. A method according to any of claims 23, 25 or 26, wherein the first and second reference signals are substantially identical.

29. A method according to any of claims 21-28, wherein each ultrasound generating means generates ultrasound signals as a response to an input signal and wherein a frequency of the ultrasound signal corresponds to a frequency of the input signal.

30. A method according to any of claims 21-23 or 25-29, wherein the first reference signal is generated having a frequency substantially equal to a frequency of the first electrical signal and wherein the second reference signal is generated having a frequency substantially equal to a frequency of the second electrical signal.

31. A method according to claim 30, wherein the first derived value or signal relates to a phase difference between the first electrical signal and the first reference value and wherein the second derived value or signal relates to a phase difference between the second electrical signal and the second reference value.

32. A method according to any of claims 21-31, wherein one or more candidate signals are provided having substantially the same frequency or a number of different frequencies.

33. A method according to claim 32, wherein the first reference signal is selected as one of the received candidate signals.

34. A method according to claim 33, wherein the selected candidate signal has a phase and a frequency corresponding to those of the first electrical signal.

35. A method according to claim 32, wherein a high frequency signal is provided having a frequency substantially higher than that of the first electrical signal, and wherein the first reference signal is generated on the basis of the high frequency signal.

36. A method according to claim 35, wherein the high frequency signal has a frequency being substantially an integer times that of the first electrical signal, and wherein the first reference signal is generated by frequency division of the high frequency signal.
